# EUROPEAN PATENT SPECIFICATION

(11) **EP 1 711 050 B1**
(45) Date of publication and mention of the grant of the patent: **05.01.2011**
(21) Application number: 04704775.8
(22) Date of filing: 23.01.2004
(51) Int. Cl.: A01K 31/20

(54) **METHOD FOR HOLDING POIKILOTHERMIC POULTRY, AND DEVICE FOR HOLDING POIKILOTHERMIC POULTRY**
VERFAHREN ZUM HALTEN VON POIKILOTHERMISCHEM GEFLÜGEL, UND VORRICHTUNG ZUM HALTEN VON POIKILOTHERMISCHEM GEFLÜGEL
PROCEDE DE MAINTIEN DE VOLAILLE HETEROTHERME ET DISPOSITIF ASSOCIE

(43) Date of publication of application: 18.10.2006
(73) Proprietor: HatchTech Group B.V., 3903 LW Veenendaal (NL)
(72) Inventor: METER, Tjitze, NL-3903 DH Veenendaal (NL)
(74) Representative: van Westenbrugge, Andries
(86) International application number: PCT/NL2004/000054
(87) International publication number: WO 2005/070198

(56) References cited:
- WO-A-00/08922
- US-A- 1 813 847
- US-A- 2 167 956
- US-A- 2 327 800
- US-A- 3 206 121
- US-A- 4 239 020

## Description

The present invention relates in particular to a method and device for holding poikilothermic poultry.

The term poikilothermic poultry is to be understood as referring to a phase in the life of poultry, in particular poultry chicks. In the period after they hatch out of the egg, chicks are poikilothermic, i.e. they are dependent on external heat sources to maintain their body temperature. In nature, this role is fulfilled by the hen. The duration of the poikilothermic phase is to some extent dependent on the species or type of poultry. In the case of chickens, this poikilothermic phase generally lasts 2-4 days, but may also be longer. According to the invention, the term poikilothermic poultry is to be understood as meaning poultry, in particular chicks, for example chicken, turkey or duck chicks, which are in the poikilothermic phase.

As such, it is known that new-born poultry is vulnerable. If poultry does not do well in the poikilothermic phase, this is generally reflected throughout its entire subsequent life, if the poultry does not indeed die prematurely. In terms of the rearing of poultry, an important factor is the yield of meat, which is then generally also not as good.

Furthermore, the standard production cycle for poultry is for the poultry to be hatched in hatcheries and then transported from the hatchery to a further farm, such as a fattening farm, where the poultry grows and is fattened. Farms of this type are generally different farms located at a distance from one another.

In the hatchery, eggs are hatched in a climate chamber, in this context also known as the hatching chamber. The environment in this climate chamber is controlled in order to optimize the hatching process. In this context, factors such as controlling the temperature, the CO₂ content and the humidity play a role. The control unit for controlling the environment in the climate chamber will generally use one or more of these factors as a measured value and/or control variable. The climate chambers in this case generally comprise large boxes in which various trays holding eggs are placed.

The eggs generally hatch approximately around the same time. For about the first day, the newly hatched chicks can then remain in the hatching machine, living off the yolk. However, no (additional) nutrients are introduced into the climate chamber. After the chicks have hatched in the hatchery, they are generally transported as quickly as possible to a subsequent farm. The subsequent farm is often a fattening farm but may also be a rearing farm where the chicks grow into laying hens or a breeding farm for breeding poultry.

The fattening farm traditionally comprises a shed with a floor, generally made from concrete which is covered with litter, for example made from paper or wood shavings. The aim is generally to keep the shed-temperature at 34°C. However, the temperature of the floor is significantly lower. A typical temperature for a concrete floor is 23°C. Depending on the type of litter, the temperature of the litter will be slightly higher or slightly lower. At any rate, the temperature of the litter will always be cooler than the shed temperature. If a chick is walking on the floor of the shed, its body temperature will be higher than if the chick is sitting or lying on the floor. The difference in body temperature between a walking chick and a sitting/lying chick can easily be 1-2°C On arrival at the fattening farm, the chicks, which are generally still poikilothermic, are placed directly into the shed. US-4,239,020 discloses such a shed or livestock house provided with heating and at least one exhaust window for effecting natural exhaust of air.

It is an object of the present invention to provide a method and a device which improve the quality of the poultry.

According to the invention, this object is achieved by the provision of a method according to claim 1, and a device according to claim 13.

The Applicant has discovered and experimentally observed that if poikilothermic poultry - i.e. the poultry in the phase which substantially immediately follows hatching from the egg - is held in a climate chamber, the temperature of which is controlled to a predetermined temperature and in which the poikilothermic poultry is fed, for a certain time - which certain time may be shorter than the duration of the poikilothermic phase, may be the same length as the poikilothermic phase or may even be longer than the duration of the poikilothermic phase - the result, in particular even in the stages of life which follow the poikilothermic phase, is improved development and more uniform growth of the poultry, and even an improved poultry immune system. Since the temperature control can be realized much more efficiently in the climate chamber than in the conventional shed, it is also possible to obtain major economic benefits, such as energy saving.

In the context of the invention, the term climate chamber is to be understood in particular as meaning a closable chamber which is surrounded by walls and is provided with means for highly accurate control of the temperature in the climate chamber. In this context, the term highly accurate is to be understood in particular as meaning a range of ±1-2°C around a desired temperature, or even greater accuracy. Climate chambers of this type generally, at least in part, have insulated walls in order to prevent the ambient temperature from having any effect, and in particular the action of the ambient temperature on the surfaces which the animals walk on is slight or even absent altogether. Furthermore, climate chambers of this type are generally provided with heat exchangers, by means of which the air in the climate chamber can be both cooled and heated.

The health of the poultry, including a reduced stress, can be improved further according to the invention if the poikilothermic poultry in the climate chamber is exposed to light, in particular artificial light.

The method according to the invention can yield further attractive economic benefits if the climate chamber which is controlled to the predetermined temperature and is holding said poikilothermic poultry is transported from a hatchery where the poultry has hatched to a further farm, such as a fattening farm where the poultry is fattened. This makes it possible to use the transport phase to hold the poultry in a climate chamber during the poikilothermic phase. At the further farm, such as the fattening farm, the poultry can be held in the climate chamber for about another 7 days, which then gives major economic advantages. In particular, the transport will involve a distance of at least 5 km. The climate chamber per se is a piece of equipment which can easily be designed to be transportable. The transport may in this case be by air or by rail, but will preferably be by road, in particular by truck, semitrailer, trailer, etc. In practice, it is found that hatcheries and fattening farms are generally located relatively close to one another in geographic terms.

It will be clear that the predetermined temperature at which the climate chamber is controlled may be a fixed temperature value but may also, and indeed preferably, be a temperature value which varies over the course of time in order, for example, to take account of natural day and night effects as well as the development/growth of the poultry. Furthermore, it will be possible for the predetermined temperature to be dependent on the species or type of poultry. As far as the Applicant is currently aware, the predetermined temperature of the climate chamber will be lower than the body temperature which is desired for the poultry. However, further research could result in more detailed and different insight relating to an optimum climate chamber temperature during the poikilothermic phase.

According to the invention, a predetermined temperature is to be understood in particular as meaning that the temperature is fixed or determined by external factors, such as scientific research or other factors, and is input to the temperature control as a desired value.

As far as the Applicant is currently aware, the predetermined temperature will be within a range from 25-40°C. The optimum, desired body temperature for the chick is generally between 40 and 41°C. Initially, the predetermined temperature will be close to this temperature, for example will be approximately 39°C for the air temperature in the climate chamber. This predetermined temperature will decrease each day, since the chicks themselves start to produce more heat. After 5-7 days, the predetermined temperature will be lower than 39°C, for example will be 33°C. The ultimate aim is for the body temperature of the chicks to be kept at the optimum, desired body temperature.

In the method according to the invention, the nutrients may be drinks, such as water, and/or food. Food pulp or gel is also possible.

Furthermore, according to the invention it is preferable if the poikilothermic poultry is held in said climate chamber which is controlled to the predetermined temperature for a period of at least 2-4 days. A period of at least 2-4 days is therefore also to be understood as encompassing a period of longer than 4 days. The period of at least 2-4 days is given here on account of the fact that current knowledge indicates that the poikilothermic phase generally lasts from 2-4 days, depending on the species/type of poultry. According to the invention, it is particularly preferred if the poultry is held in the climate chamber which is controlled to the predetermined temperature throughout substantially the entire poikilothermic phase, and is in the meantime periodically, permanently or at least one or more times fed with food and/or drinks and periodically, permanently or at least one or more times exposed to light. The poultry can still be kept in the rearing chamber even after the poikilothermic phase. The Applicant envisages that the poultry can easily be kept in the climate chamber for a total of 7 days or even longer.

To reduce the stress for the poultry and therefore in particular also to promote further development in phases which follow the poikilothermic phase, it is advantageous if the poultry, in the poikilothermic phase, is kept in separate groups of at most 2000 animals, preferably groups of between 10 and 500 animals, in order to create a sense of family. As will become apparent below, this is easy to realize by accommodating the poultry in levels in the climate chamber, in which case the levels form natural separations between the groups, and may also have separations between the groups inside each level.

To facilitate transportation, according to the invention it is highly advantageous if the climate chamber is accommodated in a container which is or can be placed onto a road transport vehicle, such as a semitrailer, a trailer or a truck. In this context, consideration may be given, for example, to a container with the dimensions of a standard transport container or a specially modified container. A container of this type may be a separate container and can therefore be placed onto a semitrailer or trailer, but may also be a container which is fixed to a trailer or semitrailer. An additional significant advantage is that when a load of poikilothermic poultry then arrives at the further farm, such as a fattening farm, this poikilothermic poultry can still be held in the climate chamber for a certain time, in particular the remaining duration of the poikilothermic phase, and if appropriate longer, before being released into the shed.

To allow optimum filling of the climate chamber and also to allow the poultry to be kept in smaller groups, which reduces the stress factor, in the device according to the invention the climate chamber comprises levels positioned above one another for holding groups of poultry above one another and a multiplicity of columns having a multiplicity of said levels for each column. The columns may if appropriate be trolleys which can in this way be wheeled into and out of a climate chamber in order for the climate chamber to be loaded and unloaded.

With a view to accurate control of the temperature in the climate chamber, according to the invention it is advantageous if a heat exchanger is provided between one or more adjacent columns, which heat exchanger extends vertically between said columns and is connected to a system of pipes for refrigerant in order for refrigerant to flow through the heat exchanger, the climate chamber being provided with ventilation means designed to circulate air through the columns - and between the levels - and through the heat exchangers in the horizontal direction. To effect this circulation, the heat exchanger will have a structure which is open in the horizontal direction in order to allow air which originates from the column on one side to pass through to the column on the other side. A climate chamber design of this type has been described in EP 1.104.987 in the name of T. Meter Holding B.V. In this case, walls designed as a heat exchanger are provided between various trolleys holding eggs which are to be hatched, these walls adjusting the temperature of the air after it has passed through a first space holding eggs which are to be hatched and before it enters the next space holding eggs which are to be hatched. The heat exchanger according to the invention will in particular be able to both cool and heat the air flowing past it. The temperature control in the climate chamber can if appropriate be optimized on the basis of the teaching described in NL-1.016.636 in the name of T. Meter Holding B.V.

For the purposes of inspection, in the device according to the invention it is advantageous that a walkway for a person is provided between one or more adjacent columns.

Furthermore, in the device according to the invention it is advantageous if the floor of each level is formed by an endless conveyor belt on which the poikilothermic poultry can walk. This makes it possible to realize various advantages, possibly in combination with one another. Allowing the conveyor belt to move slowly while poultry is being held on said level means that waste matter from the poultry will be easy to remove at the edge of the level, the end of the conveyor belt. Furthermore, a conveyor belt of this type may be useful during the loading of poultry which is present on the level and also while poultry is being placed onto the level.

For feeding purposes, according to the invention it is also advantageous if a longitudinal edge zone of the conveyor belt is separated from the remainder of the conveyor belt by a screen, if a food supply is provided at the upstream end of the conveyor belt at the longitudinal edge zone - or if appropriate elsewhere along the longitudinal edge zone - in order to supply food at the longitudinal edge zone, and if the screen is designed in such a manner that it prevents the poikilothermic poultry from walking on the longitudinal edge zone but does allow it to eat from this longitudinal edge zone. The result of this is that the food is distributed over the level by means of the conveyor belt. The screen ensures that the poikilothermic poultry will not walk in the food, but can still eat it. This prevents contamination of the food and improves accessibility of the food to substantially all the poultry which is present on the level.

In the text which follows, the invention will be explained in more detail on the basis of exemplary embodiments which are diagrammatically depicted in the drawing, in which:
Figure 1 shows a side view of a trailer provided with a climate chamber according to the invention;
Figure 2 shows a side view of a container forming a climate chamber according to the invention in the form of a diagrammatic cross-sectional view;
Figure 3 shows a side view of a container as shown in Fig. 2; and
Figure 4 shows a diagrammatic, perspective view of a level in a climate chamber according to the invention.

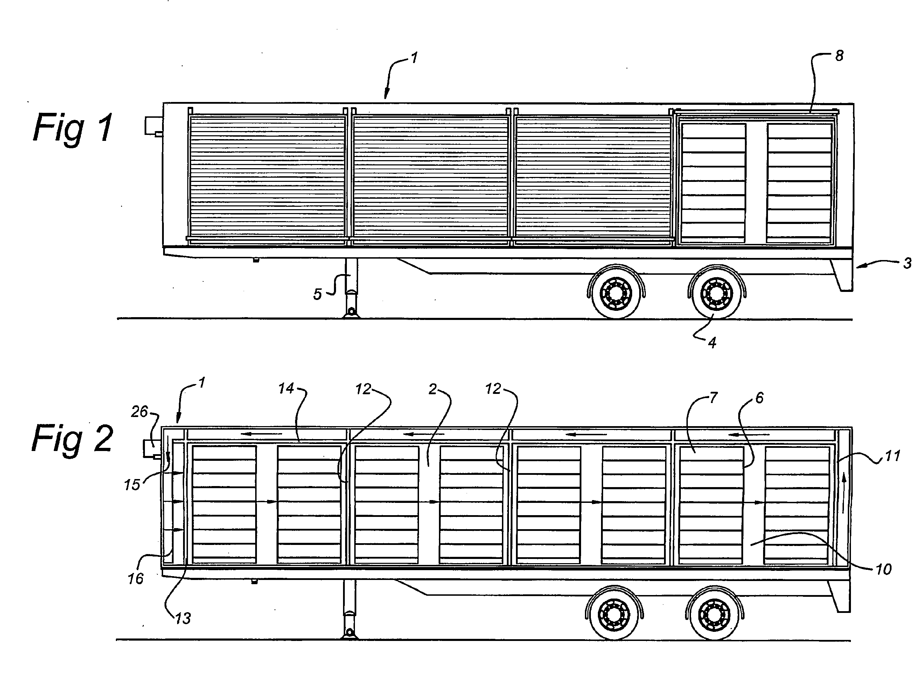

Fig. 1 shows a semitrailer 3 onto which a container 1 has been placed. This container 1 may be fixed to the semitrailer 3, or may be removable or if appropriate may be fully integrated with the semitrailer 3 or a truck. Fig. 2 shows the container 1 shown in Fig. 1 but in the state in which it has been removed from the trailer 3 and also in diagrammatic cross-section in order to provide a more detailed illustration of the interior of the container 1. The trailer 3 has wheels 4 and supporting legs 5.

A climate chamber 2 is provided in the container 1. This climate chamber 2 is subdivided into, as it were, four compartments, which are substantially identical to one another. Each compartment in this case includes two columns 6 with a walkway 10 between them. Each column 6 is composed of eight levels 7. It will be clear that the number of columns 6 and the number of levels 7 may also be different. Between each of the compartments there is a wall 12 which is designed as a heat exchanger, so that air which passes through the wall 12 can have its temperature adjusted, i.e. can be heated or cooled, by the refrigerant which is passed through the heat exchanger. In the same way as in the abovementioned EP 1.104.987, according to the invention it is highly advantageous if air flows through the climate chamber uniformly in the horizontal direction. The wall 12 can be considered as a type of radiator through which the air can pass in the horizontal direction, with heat being exchanged between the air and the refrigerant flowing through this radiator. A corresponding heat exchanger wall 13 is provided on the left-hand side of the climate chamber, and a corresponding heat exchanger wall 11 is also provided at the right-hand end of the climate chamber. The heat exchanger walls 11, 12 and 13 are therefore designed to be substantially identical. In Fig. 2, arrows indicate the direction in which air flows. 16 denotes a manifold and 15 a fan which keeps the air in motion. The manifold 16 ensures that the air is distributed uniformly across the climate chamber. A false ceiling 14 is provided in the container, forming, as it were, the ceiling of the climate chamber itself. The air can then be returned over the top of the ceiling 14. It will be clear that the arrows which are shown in Fig. 2 and indicate the direction of flow of the air may also be reversed.

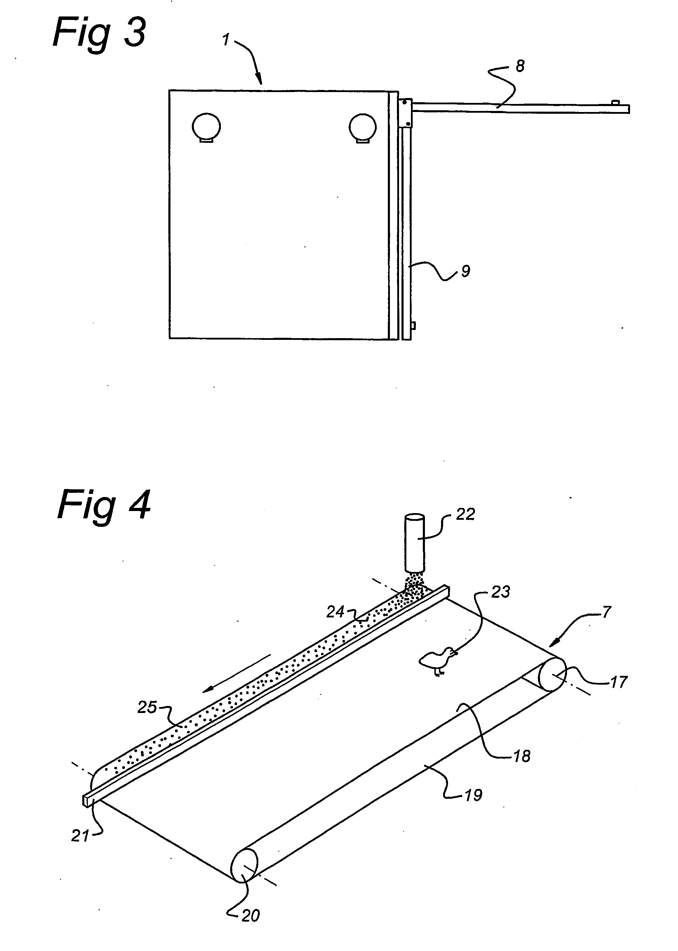

As shown in particular in Fig. 1 and 3, the container is provided with flaps 8 which open in order for the climate chamber to be loaded and unloaded.

Fig. 4 provides a highly diagrammatic illustration of a way in which a level 7 can be designed. The level 7 in this case comprises an endless conveyor belt having a top part 18, a bottom part 19 and end reversing rollers 20 and 17. The top part 18 in this case moves in the direction indicated by the arrow. Furthermore, a poikilothermic chicken chick is denoted by 23 on the top part. A longitudinal edge zone 25 of the endless conveyor belt is screened off by means of a screen 21. The screen 21 may, for example, be a partition but may also be a wire. The screen 21 serves to ensure that chicks 23 cannot step onto the longitudinal edge zone 25 but can eat food lying on the longitudinal edge zone 25. This food 24 is supplied by means of a food supply 22 at the upstream end of the longitudinal edge zone 25.

The climate chamber shown in Fig. 2 and Fig. 1 is provided with a control unit 26. This control unit 26 is designed to control the temperature system, comprising heat-exchanging walls 11, 12, 13, the fan 15 and if appropriate also the manifold 16 in such a manner that a predetermined temperature profile is maintained and followed in the climate chamber 2.

The climate chamber shown in the drawing is suitable in particular for poikilothermic poultry. This poikilothermic poultry can be placed into the climate chamber substantially immediately after it has hatched, and the trailer holding the climate chamber etc. can then be driven to a fattening farm. The trailer can be parked at the fattening farm and the poikilothermic poultry can be held in the climate chamber for a few days - in particular until the poikilothermic phase has substantially ended - before the poultry is released into the shed. The refrigerant used for the heat exchangers 11, 12 and 13 may, for example, be ground water. In this case, the container will be provided with a connection for supplying and discharging ground water and if appropriate also a pump for pumping up ground water. However, the present invention can also be used very successfully for poikilothermic poultry which is being transferred to a rearing farm for a laying farm or to a breeding farm.

## Claims

1. A method for holding poikilothermic poultry, such as chickens, turkeys and ducks, in which the poikilothermic poultry is held in a climate chamber, the temperature of which is controlled to a predetermined temperature, and in which, in this climate chamber which is controlled to the predetermined temperature, said poikilothermic poultry is fed by introducing nutrients into the climate chamber, in which the climate chamber comprises levels positioned above one another for holding groups of poultry above one another, and columns, with a multiplicity of said levels for each column.

2. The method as claimed in claim 1, in which the poikilothermic poultry is exposed, in the climate chamber which is controlled to the predetermined temperature, to light, in particular artificial light.

3. The method as claimed in one of the preceding claims, in which said climate chamber which is controlled to the predetermined temperature, holding said poikilothermic poultry, is transported from a hatchery where the poultry has hatched to a further farm, such as a fattening farm, a rearing farm for laying poultry or breeding farm for breeding poultry.

4. The method as claimed in claim 3, in which this transport involves a distance of at least 5 km.

5. The method as claimed in claim 3 or 4, in which this transport is by road, in particular by truck.

6. The method as claimed in one of the preceding claims, in which the predetermined temperature is lower than a desired body temperature of the poultry.

7. The method as claimed in one of the preceding claims, in which the predetermined temperature is in the range from 25-40°C.

8. The method as claimed in one of the preceding claims, in which the nutrients comprise drinks, such as water.

9. The method as claimed in one of the preceding claims, in which the nutrients comprise food.

10. The method as claimed in one of the preceding claims, in which the poikilothermic poultry is held in said climate chamber which is controlled to the predetermined temperature for a period of at least 2-4 days.

11. The method as claimed in one of the preceding claims, in which the poikilothermic poultry is held in separate groups of at most 2000 animals, in an embodiment 10-500 animals per level.

12. The method as claimed in one of the preceding claims, in which a uniform flow of air is established through the climate chamber in the horizontal direction.

13. A device, in particular for use in the method according to one of the preceding claims, comprising:
- a climate chamber provided with a temperature system which is designed to hold the temperature in the climate chamber at a predetermined temperature;
- a feeding system which is designed to feed the poultry in the climate chamber, in which the climate chamber comprises levels positioned above one another for holding groups of poultry above one another, and columns, with a multiplicity of said levels for each column.

14. The device as claimed in claim 13, in which the climate chamber is accommodated in a container which is or can be placed onto a road transport vehicle, such as a semitrailer, a trailer or a truck.

15. The device as claimed in one of claims 13-14, in which the predetermined temperature is lower than a body temperature which is desired for the poultry.

16. The device as claimed in one of claims 13-15, in which the predetermined temperature is in a range from 25-40°C.

17. The device as claimed in claim 13, in which a heat exchanger is provided between one or more adjacent columns, which heat exchanger extends vertically between the columns and is connected to a system of pipes for refrigerant in order for refrigerants to flow through the heat exchanger, and in which the climate chamber is provided with ventilation means designed to circulate air in the horizontal direction through said columns and through said heat exchanges.

18. The device as claimed in one of 13-17, in which a walkway for a person is provided between one or more adjacent columns.

## Patentansprüche

1. Verfahren zum Halten von poikilothermen Geflügel, wie Hühnern, Truthähnen und Enten, bei dem das poikilotherme Geflügel in einer Klimakammer gehalten wird, deren Temperatur auf eine vorbestimmte Temperatur geregelt ist, und bei dem in dieser Klimakammer, die auf eine vorbestimmte Temperatur geregelt ist, das poikilotherme Geflügel durch Einführen von Nährstoffen in die Klimakammer gefüttert wird, bei dem die Klimakammer übereinander angeordnete Etagen zum übereinander Halten von Gruppen von Geflügel und Säulen mit einer Vielzahl der Etagen für jede Säule umfasst.

2. Verfahren gemäß Anspruch 1, bei dem das poikilotherme Geflügel in der Klimakammer, die auf die vorbestimmte Temperatur geregelt ist, einem Licht ausgesetzt ist, im Besonderen einem künstlichen Licht.

3. Verfahren gemäß einem der vorangegangenen Ansprüche, bei dem die das poikilotherme Geflügel haltende Klimakammer, die auf die vorbestimmte Temperatur geregelt ist, von einem Brutplatz, wo das Geflügel geschlüpft ist, zu einem weiteren Bauernhof, wie einem Mästerei-Bauernhof, einem Zucht-Bauernhof zum Aufbewahren von Geflügel oder einem Brut-Bauernhof zum Ausbrüten von Geflügel, transportiert wird.

4. Verfahren gemäß Anspruch 3, bei dem dieser Transport einen Abstand von mindestens 5 km betrifft.

5. Verfahren gemäß Anspruch 3 oder 4, bei dem dieser Transport mittels einer Straße, im Besonderen mittels eines LKWs, stattfindet.

6. Verfahren gemäß einem der vorangegangenen Ansprüche, bei dem die vorbestimmte Temperatur geringer ist als die gewünschte Körpertemperatur des Geflügels.

7. Verfahren gemäß einem der vorangegangenen Ansprüche, bei dem die vorbestimmte Temperatur im Bereich von 25-40 °C liegt.

8. Verfahren gemäß einem der vorangegangenen Ansprüche, bei dem die Nährstoffe Getränke, wie Wasser, umfassen.

9. Verfahren gemäß einem der vorangegangenen Ansprüche, bei dem die Nährstoffe Nahrungsmittel umfassen.

10. Verfahren gemäß einem der vorangegangenen Ansprüche, bei dem das poikilotherme Geflügel in der Klimakammer gehalten wird, die über einen Zeitraum von mindestens 2-4 Tagen auf eine vorbestimmte Temperatur geregelt ist.

11. Verfahren gemäß einem der vorangegangenen Ansprüche, bei dem das poikilotherme Geflügel in separaten Gruppen von höchstens 2000 Tieren gehalten wird, in einer Ausführungsform 10-500 Tiere pro Etage.

12. Verfahren gemäß einem der vorangegangenen Ansprüche, bei dem in der horizontalen Richtung ein gleichmäßiger Luftstrom durch die Klimakammer erzeugt wird.

13. Vorrichtung, im Besonderen zur Verwendung beim Verfahren gemäß einem der vorangegangenen Ansprüche, umfassend:
eine Klimakammer, die mit einem Temperatursystem versehen ist, das zum Halten der Temperatur in der Klimakammer auf einer vorbestimmten Temperatur ausgelegt ist,
ein Füttersystem, das zum Füttern des Geflügels in der Klimakammer ausgelegt ist,
bei der die Klimakammer übereinander angeordnete Etagen zum übereinander Halten von Gruppen von Geflügel und Säulen mit einer Vielzahl der Etagen für jede Säule umfasst.

14. Vorrichtung gemäß Anspruch 13, bei der die Klimakammer in einem Behälter aufgenommen ist, der auf einem Straßentransportfahrzeug platziert ist oder platziert werden kann, wie einem Sattelanhänger, einem Anhänger oder einem LKW.

15. Vorrichtung gemäß einem der Ansprüche 13-14, bei der die vorbestimmte Temperatur geringer ist als eine für das Geflügel gewünschte Körpertemperatur.

16. Vorrichtung gemäß einem der Ansprüche 13-15, bei der die vorbestimmte Temperatur in einem Bereich von 25-40°C liegt.

17. Vorrichtung gemäß Anspruch 13, bei der ein Wärmetauscher zwischen einer oder mehreren benachbarten Säulen vorgesehen ist, welcher Wärmetauscher sich vertikal zwischen den Säulen erstreckt und mit einem Rohrsystem für ein Kühlmittel verbunden ist, damit Kühlmittel durch den Wärmetauscher strömen, und bei der die Klimakammer mit einem Lüftermittel versehen ist, das zum Zirkulieren von Luft in der horizontalen Richtung durch die Säulen und durch die Wärmetauscher ausgelegt ist.

18. Vorrichtung gemäß einem der Ansprüche 13-17, bei der ein Gehweg für eine Person zwischen einer oder mehreren benachbarten Säulen vorgesehen ist.

## Revendications

1. Procédé de maintien de volaille poïkilotherme, comme les poulets, les dindes et les canards, dans lequel la volaille poïkilotherme est conservée dans une chambre climatique, dont la température est contrôlée à une température prédéterminée, et dans laquelle, dans cette chambre climatique, qui est contrôlée à la température prédéterminée, ladite volaille poïkilotherme est alimentée en introduisant des nutriments dans ladite chambre climatique, dans lequel la chambre climatique comprend des niveaux positionnés les uns au dessus des autres pour maintenir des groupes de volailles les uns au dessus des autres, et des colonnes, avec une multiplicité desdits niveaux pour chaque colonne.

2. Procédé selon la revendication 1, dans lequel la volaille poïkilotherme est exposée, dans la chambre climatique qui est contrôlée à la température prédéterminée, à la lumière, en particulier la lumière artificielle.

3. Procédé selon l'une quelconque des revendications précédentes, dans lequel ladite chambre climatique, qui est contrôlée à la température prédéterminée, maintenant ladite volaille poïkilotherme, est transportée d'un couvoir où la volaille a couvé à une autre ferme, comme une ferme d'engraissement, une ferme d'élevage pour faire pondre la volaille ou une ferme d'élevage pour élever la volaille.

4. Procédé selon la revendication 3, dans lequel ce transport implique une distance d'au moins 5 km.

5. Procédé selon les revendications 3 ou 4, dans lequel ce transport s'effectue par la route, en particulier par camion.

6. Procédé selon l'une quelconque des revendications précédentes, dans lequel la température prédéterminée est inférieure à une température du corps souhaitée de la volaille.

7. Procédé selon l'une des revendications précédentes, dans lequel la température prédéterminée est dans la gamme de 25-40°C.

8. Procédé selon l'une des revendications précédentes, dans lequel les nutriments comprennent des boissons, comme l'eau.

9. Procédé selon l'une des revendications précédentes, dans lequel les nutriments comprennent des aliments.

10. Procédé selon l'une des revendications précédentes, dans lequel la volaille poïkilotherme est maintenue dans ladite chambre climatique, qui est contrôlée à la température prédéterminée, pendant une période d'au moins 2-4 jours.

11. Procédé selon l'une des revendications précédentes, dans lequel la volaille poïkilotherme est maintenue dans des groupes séparés d'au plus 2000 animaux, dans un mode de réalisation de 10-500 animaux par niveau.

12. Procédé selon l'une des revendications précédentes, dans lequel un flux d'air uniforme est établi à travers la chambre climatique dans la direction horizontale.

13. Dispositif, en particulier à utiliser dans le procédé selon une des revendications précédentes, comprenant :
- une chambre climatique dotée d'un système de température qui est conçu pour maintenir la température dans la chambre climatique à une température prédéterminée ;
- un système d'alimentation qui est conçu pour nourrir la volaille dans la chambre climatique, dans lequel la chambre climatique comprend des niveaux positionnés les uns au dessus des autres, afin de maintenir des groupes de volailles les uns au dessus des autres, et des colonnes, avec une multiplicité desdits niveaux pour chaque colonne.

14. Dispositif selon la revendication 13, dans lequel la chambre climatique est contenue dans un contenant qui est ou peut être placé sur un véhicule de transport sur route, comme un semi-remorque, une remorque ou un camion.

15. Dispositif selon l'une quelconque des revendications 13-14, dans lequel la température prédéterminée est inférieure à une température corporelle qui est souhaitée pour la volaille.

16. Dispositif selon l'une quelconque des revendications 13-15, dans lequel la température prédéterminée est dans une gamme de 25-40°C.

17. Dispositif selon la revendication 13, dans lequel un échangeur de chaleur est fourni entre une ou plusieurs colonnes adjacentes, ledit échangeur de chaleur s'étendant verticalement entre les colonnes et étant connecté à un système de conduits pour le réfrigérant, afin que les réfrigérants s'écoulent à travers l'échangeur de chaleur, et dans lequel la chambre climatique est dotée de moyens de ventilation conçus pour faire circuler l'air dans la direction horizontale à travers lesdites colonnes et à travers lesdits échangeurs de chaleur.

18. Dispositif selon l'une quelconque des revendications 13-17, dans lequel un passage pour une personne est ménagé entre une ou plusieurs colonnes adjacentes.
